# FASCICULE DE BREVET EUROPEEN

(11) **EP 1 683 709 B1**
(45) Date de publication et mention de la délivrance du brevet: **27.02.2008**
(21) Numéro de dépôt: 06300058.2
(22) Date de dépôt: 23.01.2006
(51) Int. Cl.: B62D 21/15

(54) **Élément de liaison entre un berceau et un élément d'absorption de choc**
Verbindungselement zwischen einem Hilfsrahmen und einem energieabsorbierenden Element
Connection element between an engine cradle and a shock absorbing element

(30) Priorité: 24.01.2005 FR 0550200
(43) Date de publication de la demande: 26.07.2006
(73) Titulaire: RENAULT S.A.S., 92100 Boulogne Billancourt (FR)
(72) Inventeur: Rollet, Rémi, 91190 Gif Sur Yvette (FR); Boutron, Olivier, 27940 Aubevoye (FR)

(56) Documents cités:
- EP-A- 0 926 049
- FR-A- 2 835 799

## Description

L'invention concerne un ensemble de structure de caisse pour un véhicule automobile.

L'invention concerne plus particulièrement un ensemble de structure de caisse pour un véhicule automobile, du type qui comporte un élément de structure de caisse à l'avant d'une partie inférieure duquel est agencé un berceau présentant sensiblement la forme d'un "U" couché dont les branches sont tournées vers l'avant du véhicule, et du type qui comporte un élément d'absorption de choc entourant un groupe motopropulseur du véhicule et présentant sensiblement la forme d'un "U" couché dont les branches, tournées vers l'arrière, sont liées à l'élément de structure de caisse et sont susceptibles d'être rendues solidaires, en cas de choc, de chacune des branches du berceau par des moyens de liaison pour transmettre au berceau les efforts résultant du choc afin de protéger le groupe motopropulseur.

On connaît de nombreux exemples d'ensembles de structure de caisse de ce type.

Le document FR-A1-2.835.799 décrit et représente un ensemble de structure du type décrit précédemment dans lequel des moyens de liaison sont constitués d'un pion porté par l'élément d'absorption de choc qui est destiné, en cas de choc d'intensité élevée seulement, à coopérer avec un alésage du berceau pour former une liaison de type encastrement.

L'inconvénient de cette conception est qu'en cas de choc d'intensité réduite, les efforts résultant du choc ne sont pas transmis de l'élément d'absorption de choc au berceau.

Pour remédier à cet inconvénient, l'invention propose un ensemble de structure du type décrit précédemment permettant de transmettre au berceau d'une part les efforts résultant d'un choc d'intensité réduite et d'autre part les efforts résultant d'un choc d'intensité élevée.

Dans ce but, l'invention propose un ensemble de structure du type décrit précédemment, caractérisé en ce que les moyens de liaison comportent un élément de liaison, qui est porté par l'élément d'absorption de choc et qui est interposé avec jeu entre chaque branche du berceau et chaque branche de l'élément d'absorption de choc, dont au moins une face est susceptible de prendre appui sur le berceau en cas de choc d'intensité réduite pour transmettre au berceau (16) les efforts résultant du choc et qui est susceptible de lier rigidement chaque branche du berceau avec chaque branche de l'élément d'absorption de choc en cas de choc d'intensité élevée.

D'autres caractéristiques et avantages de l'invention apparaîtront à la lecture de la description détaillée qui va suivre pour la compréhension de laquelle on se reportera aux dessins annexés dans lesquels :
- la figure 1 est une vue d'ensemble en perspective d'un ensemble de structure de caisse selon l'invention.
- la figure 2 est une vue de détail en perspective d'un ensemble de structure de caisse selon l'invention représenté dans une première configuration de repos ;
- la figure 3 est une vue de détail en perspective d'un ensemble de structure de caisse selon l'invention représenté dans une deuxième configuration de choc d'intensité réduite ;
- la figure 4 est une vue de détail en perspective d'un ensemble de structure de caisse selon l'invention représenté dans une troisième configuration de choc d'intensité élevée ;

Dans la description qui va suivre, des éléments identiques, similaires ou analogues seront désignés par les mêmes chiffres de référence.

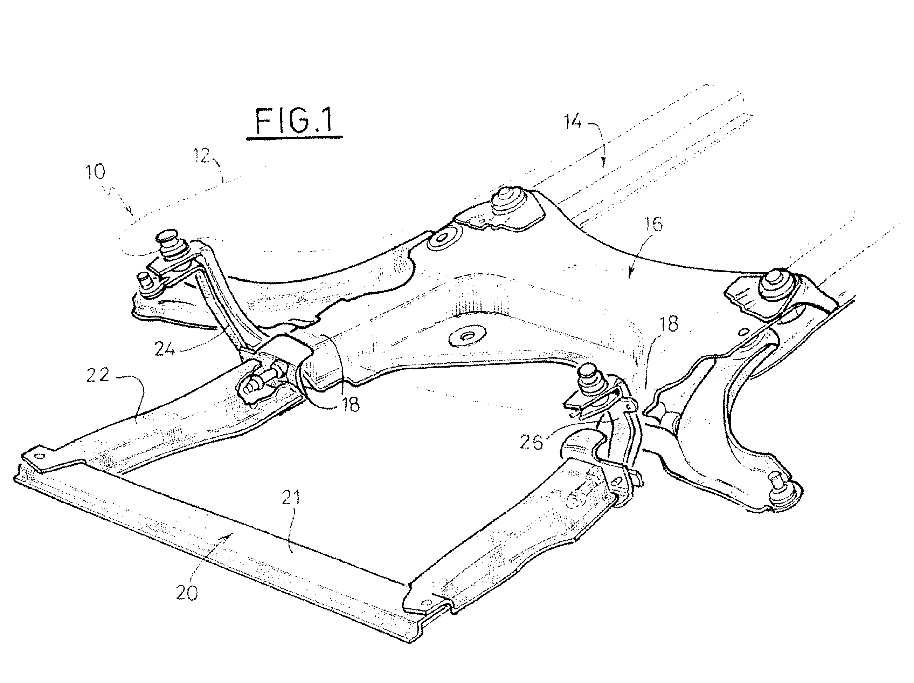

On a représenté à la figure 1 un ensemble 10 de structure de caisse pour un véhicule automobile. De manière connue, l'ensemble 10 comporte un élément 12 de structure de caisse comportant à l'avant une partie inférieure, constituée par exemple de longerons 14. A l'avant de cette partie inférieure est agencé un berceau 16 présentant sensiblement la forme d'un "U" couché dont les branches 18 sont tournées vers l'avant du véhicule et qui est par exemple destiné à recevoir entre lesdites branches 18 un groupe motopropulseur (non représenté) du véhicule.

De manière connue, l'ensemble 10 comporte un élément 20 d'absorption de choc entourant le groupe motopropulseur et présentant sensiblement la forme d'un "U" couché dont les branches 22, réunies par une traverse 21 et tournées vers l'arrière, sont liées à l'élément 12 de structure de caisse, par exemple par l'intermédiaire de pendeloques 24 et 26 et sont susceptibles d'être rendues solidaires, en cas de choc, de chacune des branches 18 du berceau 16 par des moyens 28 de liaison pour transmettre au berceau 16 les efforts résultant du choc afin de protéger le groupe motopropulseur.

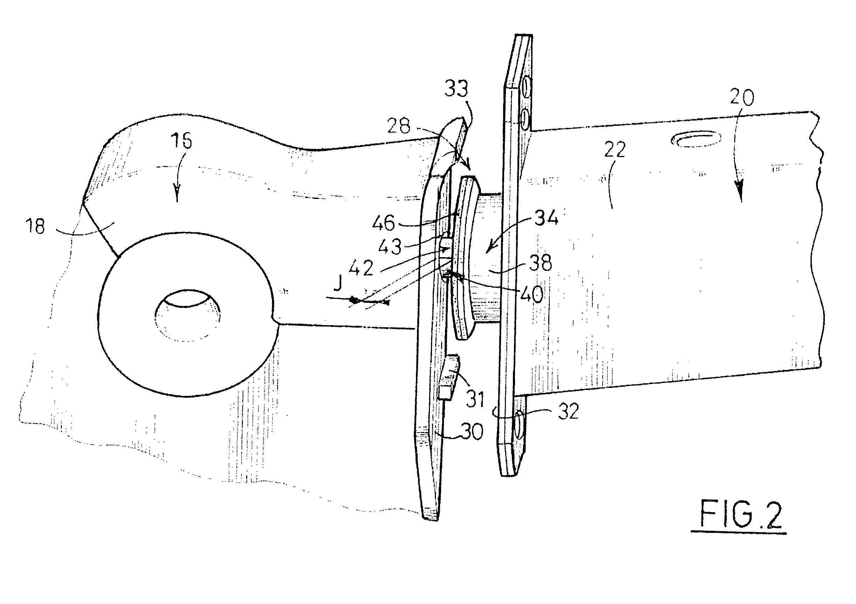

Le détail de ces moyens 28 de liaison a été représenté aux figures 2 à 4.

Conformément à l'invention, les moyens de liaison comportent un élément 28 de liaison, qui est porté par l'élément 20 d'absorption de choc et qui est interposé avec un jeu "J" entre chaque branche 18 du berceau 16 et chaque branche 22 de l'élément 20 d'absorption de choc. Au moins une face 40 de cet élément 28 est susceptible de prendre appui sur le berceau 16 en cas de choc d'intensité réduite. Par ailleurs, l'élément 28 de liaison est susceptible de solidariser chaque branche 18 du berceau 16 avec chaque branche 22 de l'élément 20 d'absorption de choc en cas de choc d'intensité élevée.

Comme l'illustrent ces figures, une face avant 30 d'extrémité de chaque branche 18 du berceau est agencée avec jeu en regard d'une face arrière 32 d'extrémité de chaque branche 22 de l'élément d'absorption de choc et un élément 28 de liaison formant les moyens de liaison comporte :
- une portée cylindrique 34, qui est monté serrée dans un perçage 36 de chaque face arrière 32 d'extrémité de chaque branche 22 de l'élément 20 d'absorption de choc, et dont un tronçon 38, qui fait saillie à partir de la face arrière 32 de l'élément 20 d'absorption de choc, comporte à son extrémité une face 40 d'épaulement qui est destinée à prendre appui sur la face avant 30 d'extrémité de chaque branche 18 du berceau 16 en cas de choc d'intensité réduite, et est destinée à pénétrer entièrement dans le perçage 36 en cas de choc d'intensité élevée,
- un doigt de guidage 42 qui traverse l'élément 28 de liaison, qui est reçu dans un perçage 43 de chaque face avant 30 d'extrémité de chaque branche 18 du berceau 16, et qui est reçu dans l'élément 20 d'absorption de choc.

Avantageusement, la portée 34 cylindrique de l'élément de liaison est d'un diamètre sensiblement voisin de la dimension transversale de la branche 22 de l'élément 20 d'absorption de choc et elle est reçue dans un guide tubulaire 44 qui débouche par l'intermédiaire du perçage 36 dans la face arrière 32 de l'élément 20 d'absorption de choc pour, en cas de choc d'intensité élevée, coulisser dans ledit guide 44 de manière à solidariser l'élément 20 d'absorption de choc au berceau 18.

Plus particulièrement, la face d'épaulement 40 de l'élément 28 de liaison porte une rondelle 46 en matériau élastomère qui est destinée à prendre appui sur la face 30 avant d'extrémité de chaque branche 18 du berceau 16 en cas de choc d'intensité réduite.

Avantageusement, chaque face avant 30 d'extrémité de chaque branche 18 du berceau 16 comporte deux pattes 31, 33 de butée, faisant saillie à partir de ladite face avant 30 et agencées transversalement de part et d'autre de l'élément 28 de liaison, contre lesquelles la face arrière 32 de l'élément 20 d'absorption de choc est susceptible d'être reçu en butée lors d'un choc d'intensité élevé.

Il sera compris que ces pattes 31, 33 peuvent être venues de matière avec le matériau de la face avant 30 d'extrémité de chaque branche 18 du berceau 16.

De préférence, et de manière non limitative de l'invention, la rondelle 46 en matériau élastomère est collée sur la face d'épaulement 40 de l'élément 28 de liaison.

Du côté opposé à la face d'épaulement 40, l'extrémité du doigt 42 de guidage qui est reçue dans l'élément d'absorption de choc est conformée sous la forme d'un pion dont au moins une portion cylindrique 48 est agencée en regard d'un alésage interne (non représenté) de l'élément 20 d'absorption de choc et est susceptible de pénétrer dans ledit alésage pour s'y encastrer en cas de choc d'intensité élevée.

Cet alésage peut être, à titre d'exemple et de manière non limitative de l'invention, un alésage du type de celui décrit dans la demande FR-A1-2.835.799, dans lequel l'extrémité du doigt de guidage 42 conformée en pion est destinée à s'encastrer en cas de choc d'intensité élevée.

Dans cette configuration, l'ensemble 10 de structure de caisse est susceptible d'occuper trois configurations différentes.

Dans une configuration de repos qui a été représentée à la figure 2, le tronçon 38 de la portée cylindrique 34 fait saille à partir de la face arrière 32 de l'élément 20 d'absorption de choc, et sa face 40 d'épaulement est agencée avec un jeu "J" en regard de la face avant 30 d'extrémité de la branche 18 du berceau 16. le doigt de guidage 42 est reçu dans la face avant 30 d'extrémité de la branche 18 du berceau 16.

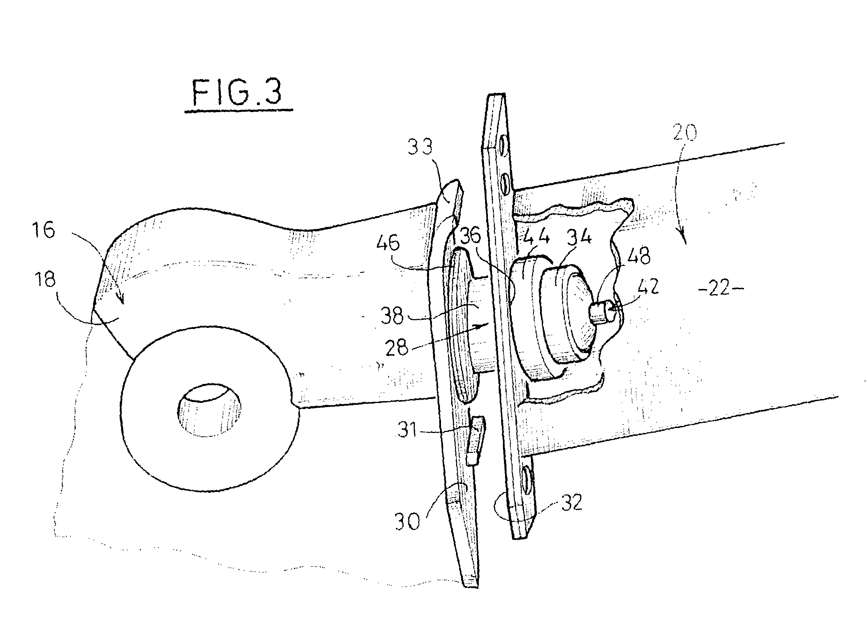

Lorsque le véhicule subit un choc frontal d'intensité réduite comme représenté à la figure 3, la face 40 d'épaulement, porteuse de la rondelle 46 en matériau élastomère, entre en contact avec la face avant 30 d'extrémité de la branche 18 du berceau 16, et transmet une partie des efforts résultant du choc de l'élément 20 d'absorption de choc au berceau 16, ce qui permet de protéger le groupe motopropulseur.

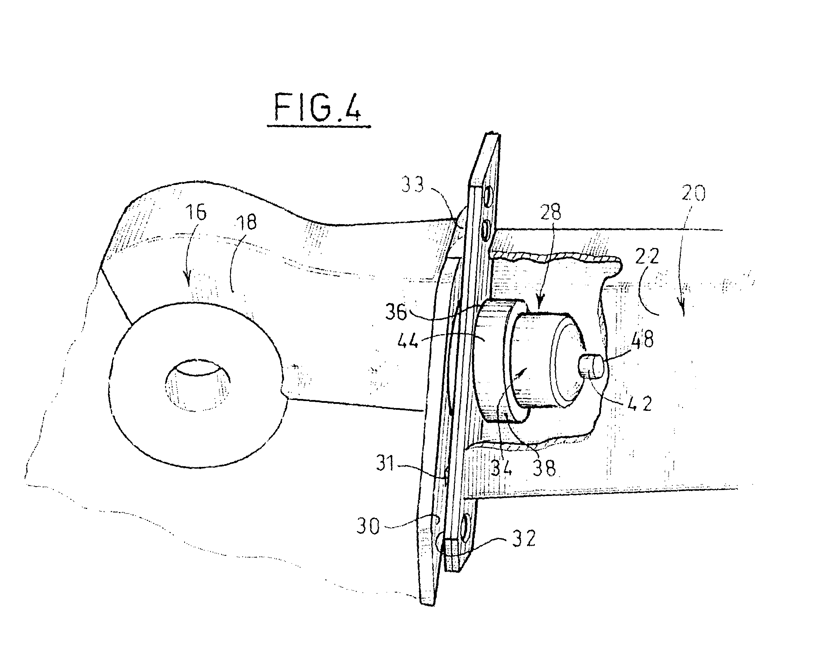

Enfin, lorsque le véhicule subit un choc frontal d'intensité élevée comme représenté à la figure 4, la face 40 d'épaulement, porteuse de la rondelle 46 en matériau élastomère, entre en contact avec la face avant 30 d'extrémité de la branche 18 du berceau 16 puis le tronçon 38 de la portée cylindrique 34 pénètre dans le guide tubulaire 44 pour que l'élément 28 soit entièrement reçu dans ledit guide, créant ainsi une liaison encastrement entre le berceau 16 et l'élément 20 d'absorption de choc, ce qui permet de transmettre l'intégralité des efforts résultant du choc de l'élément 20 d'absorption de choc au berceau 16, en protégeant le groupe motopropulseur. La face arrière 32 de l'élément 20 d'absorption de choc entre alors en contact et prend appui sur les deux pattes 31, 33 d'appui faisant saillie à partir de la face avant 30 du berceau 16.

L'invention permet donc de protéger de manière simple et efficace des éléments fonctionnels du véhicule, par exemple le groupe motopropulseur dudit véhicule automobile, de tout type de choc.

## Revendications

1. Ensemble (10) de structure de caisse pour un véhicule automobile, du type qui comporte un élément (12) de structure de caisse à l'avant d'une partie inférieure (14) duquel est agencé un berceau (16) présentant sensiblement la forme d'un "U" couché dont les branches (18) sont tournées vers l'avant du véhicule, et du type qui comporte un élément (20) d'absorption de choc entourant un groupe motopropulseur du véhicule et présentant sensiblement la forme d'un "U" couché dont les branches (22), tournées vers l'arrière, sont liées à l'élément (12) de structure de caisse et sont susceptibles d'être rendues solidaires, en cas de choc, de chacune des branches (18) du berceau (16) par des moyens (28) de liaison pour transmettre au berceau (16) les efforts résultant du choc afin de protéger le groupe motopropulseur,
**caractérisé en ce que** les moyens de liaison comportent un élément (28) de liaison, qui est porté par l'élément (20) d'absorption de choc et qui est interposé avec jeu (J) entre chaque branche (18) du berceau (16) et chaque branche (22) de l'élément (20) d'absorption de choc, dont au moins une face (40) est susceptible de prendre appui sur le berceau (16) en cas de choc d'intensité réduite pour transmettre au berceau (16) les efforts résultant du choc et qui est susceptible de solidariser chaque branche (18) du berceau (16) avec chaque branche (22) de l'élément (20) d'absorption de choc en cas de choc d'intensité élevée.

2. Ensemble (10) de structure selon la revendication précédente, **caractérisé en ce qu**'une face avant (30) d'extrémité de chaque branche (18) du berceau (16) est agencée avec un jeu supérieur au jeu "J" en regard d'une face arrière (32) d'extrémité de chaque branche (22) de l'élément (20) d'absorption de choc et ce que l'élément (28) de liaison comporte :
- une portée cylindrique (34), qui est monté serrée dans un perçage (36) de chaque face arrière (32) d'extrémité de chaque branche (22) de l'élément (20) d'absorption de choc, et dont un tronçon, (38) qui fait saillie à partir de la face arrière (32) de l'élément (20) d'absorption de choc, comporte à son extrémité une face d'épaulement (40) qui est destinée à prendre appui sur la face avant (30) d'extrémité de chaque branche (18) du berceau (16) en cas de choc d'intensité réduite, et est destinée à pénétrer entièrement dans le perçage (36) en cas de choc d'intensité élevée,
- un doigt (42) de guidage qui traverse l'élément (28) de liaison, qui est reçu dans un perçage de chaque face avant (30) d'extrémité de chaque branche (18) du berceau (16), et qui est reçu dans l'élément (20) d'absorption de choc.

3. Ensemble (10) de structure selon la revendication précédente, **caractérisé en ce que** la portée (34) cylindrique de l'élément de liaison est d'un diamètre sensiblement voisin de la dimension transversale de la branche (22) de l'élément (20) d'absorption de choc et **en ce qu'**elle est reçue dans un guide (44) tubulaire qui débouche par l'intermédiaire du perçage (36) dans la face arrière (32) de l'élément (20) d'absorption de choc pour, en cas de choc d'intensité élevée, coulisser dans ledit guide (44) de manière à solidariser l'élément (20) d'absorption de choc au berceau (16).

4. Ensemble (10) de structure selon l'une des revendications 2 ou 3, **caractérisé en ce que** la face (40) d'épaulement de l'élément de liaison porte une rondelle (46) en matériau élastomère qui est destinée à prendre appui sur la face avant (30) d'extrémité de chaque branche (18) du berceau (16) en cas de choc d'intensité réduite.

5. Ensemble (10) de structure selon la revendication précédente, **caractérisé en ce que** chaque face avant (30) d'extrémité de chaque branche (18) du berceau (16) comporte deux pattes (31, 33) d'appui, faisant saillie à partir de ladite face avant (30) et agencées transversalement de part et d'autre de l'élément (28) de liaison, contre lesquelles la face arrière (32) de l'élément (20) d'absorption de choc est susceptible d'être reçu en appui lors d'un choc d'intensité élevé.

6. Ensemble (10) de structure selon l'une des revendications 4 ou 5, **caractérisé en ce que** la rondelle (46) en matériau élastomère est collée sur la face (40) d'épaulement de l'élément (28) de liaison.

7. Ensemble (10) de structure selon l'une quelconque des revendications 2 à 6, **caractérisé en ce que** l'extrémité du doigt (42) de guidage qui est reçue dans l'élément (20) d'absorption de choc est conformée sous la forme d'un pion dont au moins une portion cylindrique (48) est agencée en regard d'un alésage interne de l'élément (20) d'absorption de choc et est susceptible de pénétrer dans ledit alésage pour s'y encastrer en cas de choc d'intensité élevée.

## Claims

1. Motor vehicle body structure assembly (10) of the type which comprises a body structure element (12) at the front of a lower part (14) of which there is positioned a cradle (16) which is substantially in the shape of a lying-down "U" the branches (18) of which face towards the front of the vehicle, and of the type which comprises a shock absorbing element (20) surrounding a power plant of the vehicle and having substantially the shape of a lying-down "U" of which the rearwardly facing branches (22) are connected to the body structure element (12) and can be secured, in the event of an impact, to each of the branches (18) of the cradle (16) by connecting means (28) in order to transmit the loads resulting from the impact to the cradle (16) in order to protect the power plant,
**characterized in that** the connecting means comprise a connecting element (28) which is borne by the shock absorbing element (20) and which is interposed with clearance (J) between each branch (18) of the cradle (16) and each branch (22) of the shock absorbing element (20) at least one face (40) of which is able to bear against the cradle (16) in the event of a low energy impact in order to transmit the loads resulting from the impact to the cradle (16) and which is capable of securing each branch (18) of the cradle (16) to each branch (22) of the shock absorbing element (20) in the event of a high energy impact.

2. Structure assembly (10) according to the preceding claim, **characterized in that** an end front face (30) of each branch (18) of the cradle (16) is positioned with a clearance greater than the clearance "J" facing an end rear face (32) of each branch (22) of the shock absorbing element (20) and **in that** the connecting element (28) comprises:
- a cylindrical bearing surface (34) which is fitted tightly into a hole (36) in each end rear face (32) of each branch (22) of the shock absorbing element (20) and of which a section (38), which projects from the rear face (32) of the shock absorbing element (20), comprises at its end a shoulder face (40) which is intended to bear against the end front face (30) of each branch (18) of the cradle (16) in the event of a low energy impact and is intended to fully enter the hole (36) in the event of a high energy impact,
- a guide finger (42) which passes through the connecting element (28) and is housed in a hole in each end front face (30) of each branch (18) of the cradle (16) and which is housed in the shock absorbing element (20).

3. Structure assembly (10) according to the preceding claim, **characterized in that** the cylindrical bearing surface (34) of the connecting element is of a diameter roughly equivalent to the transverse dimension of the branch (22) of the shock absorbing element (20) and **in that** it is housed in a tubular guide (44) which opens via the hole (36) into the rear face (32) of the shock absorbing element (20) in order, in the event of a high energy impact, to slide in the said guide (44) in such a way as to secure the shock absorbing element (20) to the cradle (16).

4. Structure assembly (10) according to either one of Claims 2 and 3, **characterized in that** the shoulder face (40) of the connecting element bears an elastomeric washer (46) which is intended to bear against the end front face (30) of each branch (18) of the cradle (16) in the event of a low energy impact.

5. Structure assembly (10) according to the preceding claim, **characterized in that** each end front face (30) of each branch (18) of the cradle (16) has two bearing lugs (31, 33) projecting from the said front face (30) and positioned transversely one on each side of the connecting element (28), against which lugs the rear face (32) of the shock absorbing element (20) can come to bear in the event of a high energy impact.

6. Structure assembly (10) according to either one of Claims 4 and 5, **characterized in that** the elastomeric washer (46) is bonded onto the shoulder face (40) of the connecting element (28).

7. Structure assembly (10) according to any one of Claims 2 to 6, **characterized in that** the end of the guide finger (42) which is housed in the shock absorbing element (20) is shaped into the shape of a pin at least a cylindrical portion (48) of which is positioned facing an internal bore of the shock absorbing element (20) and can enter the said bore in order to become nested therein in the event of a high energy impact.

## Patentansprüche

1. Struktureinheit (10) eines Kraftfahrzeugaufbaus von dem Typ, der ein Aufbau-Strukturelement (12) aufweist, an der Vorderseite von dessen unterem Bereich (14) eine Halterung (16) angeordnet ist, die im Wesentlichen die Form eines liegenden "U" aufweist, dessen Schenkel (18) zur Vorderseite des Fahrzeugs gerichtet sind, und von dem Typ, der ein Stoßabsorptionselement (20) aufweist, das ein Antriebsaggregat des Fahrzeugs umgibt und im Wesentlichen die Form eines liegenden "U" aufweist, dessen nach hinten weisende Schenkel (22) mit dem Aufbau-Strukturelement (12) verbunden sind und im Fall eines Stoßes mit jedem der Schenkel (18) der Halterung (16) durch Verbindungsmittel (28) fest verbunden werden können, um an die Halterung (16) die aus dem Stoß resultierenden Kräfte zu übertragen, damit das Antriebsaggregat geschützt wird,
**dadurch gekennzeichnet, dass** die Verbindungsmittel ein Verbindungselement (28) aufweisen, das vom Stoßabsorptionselement (20) getragen wird und das mit Spiel (J) zwischen jeden Schenkel (18) der Halterung (16) und jeden Schenkel (22) des Stoßabsorptionselements (20) zwischengefügt ist, von dem im Fall eines Stoßes mit reduzierter Stärke mindestens eine Seite (40) auf der Halterung (16) aufliegen kann, um die aus dem Stoß resultierenden Kräfte auf die Halterung (16) zu übertragen, und das im Fall eines Stoßes großer Stärke jeden Schenkel (18) der Halterung (16) mit jedem Schenkel (22) des Stoßabsorptionselements (20) fest verbinden kann.

2. Struktureinheit (10) nach dem vorhergehenden Anspruch, **dadurch gekennzeichnet, dass** eine End-Vorderseite (30) jedes Schenkels (18) der Halterung (16) mit einem größeren Spiel als das Spiel "J" gegenüber einer End-Rückseite (32) jedes Schenkels (22) des Stoßabsorptionselements (20) angeordnet ist, und dass das Verbindungselement (28) aufweist:
- einen zylindrischen Vorsprung (34), der in eine Bohrung (36) jeder End-Rückseite (32) jedes Schenkels (22) des Stoßabsorptionselements (20) eingespannt eingesetzt ist, und von dem ein Abschnitt (38), der ausgehend von der Rückseite (32) des Stoßabsorptionselements (20) vorsteht, an seinem Ende eine Schulterseite (40) aufweist, die dazu bestimmt ist, im Fall eines Stoßes von reduzierter Stärke auf der End-Vorderseite (30) jedes Schenkels (18) der Halterung (16) aufzuliegen, und dazu bestimmt ist, im Fall eines Stoßes von großer Stärke vollständig in die Bohrung (36) einzudringen,
- einen Führungsfinger (42), der das Verbindungselement (28) durchquert, der in einer Bohrung jeder End-Vorderseite (30) jedes Schenkels (18) der Halterung (16) aufgenommen wird, und der im Stoßabsorptionselement (20) aufgenommen wird.

3. Struktureinheit (10) nach dem vorhergehenden Anspruch, **dadurch gekennzeichnet, dass** der zylindrische Vorsprung (34) des Verbindungselements einen Durchmesser im Wesentlichen nahe der Querabmessung des Schenkels (22) des Stoßabsorptionselements (20) hat, und dass er in einer rohrförmigen Führung (44) aufgenommen wird, die über die Bohrung (36) in der Rückseite (32) des Stoßabsorptionselements (20) mündet, um im Fall eines Stoßes großer Stärke so in der Führung (44) zu gleiten, dass das Stoßabsorptionselement (20) fest mit der Halterung (16) verbunden wird.

4. Struktureinheit (10) nach einem der Ansprüche 2 oder 3, **dadurch gekennzeichnet, dass** die Schulterseite (40) des Verbindungselements eine Unterlegscheibe (46) aus Elastomermaterial trägt, die dazu bestimmt ist, bei einem Stoß von reduzierter Stärke auf der End-Vorderseite (30) jedes Schenkels (18) der Halterung (16) aufzuliegen.

5. Struktureinheit (10) nach dem vorhergehenden Anspruch, **dadurch gekennzeichnet, dass** jede End-Vorderseite (30) jedes Schenkels (18) der Halterung (16) zwei Auflageleisten (31, 33) aufweist, die ausgehend von der Vorderseite (30) vorstehen und quer zu beiden Seiten des Verbindungselements (28) angeordnet sind, gegen die die Rückseite (32) des Stoßabsorptionselements (20) bei einem Stoß großer Stärke in Auflage aufgenommen werden kann.

6. Struktureinheit (10) nach einem der Ansprüche 4 oder 5, **dadurch gekennzeichnet, dass** die Unterlegscheibe (46) aus Elastomermaterial auf die Schulterseite (40) des Verbindungselements (28) geklebt ist.

7. Struktureinheit (10) nach einem der Ansprüche 2 bis 6, **dadurch gekennzeichnet, dass** das Ende des Führungsfingers (42), der in dem Stoßabsorptionselement (20) aufgenommen wird, in Form eines Zapfens vorliegt, von dem mindestens ein zylindrischer Abschnitt (48) gegenüber einer Innenbohrung des Stof3absorptionselements (20) angeordnet und in der Lage ist, in die Bohrung einzudringen, um sich dort im Fall eines Stoßes großer Stärke einzufügen.
